# EUROPÄISCHE PATENTSCHRIFT

(11) **EP 1 853 613 B1**
(45) Veröffentlichungstag und Bekanntmachung des Hinweises auf die Patenterteilung: **02.07.2008**
(21) Anmeldenummer: 06707401.3
(22) Anmeldetag: 03.03.2006
(51) Int. Cl.: C07F 7/18

(54) **VERFAHREN ZUR HERSTELLUNG VON ALKOXYSILYLMETHYLISOCYANURATEN**
METHOD FOR PRODUCING ALKOXYSILYL METHYL ISOCYANURATES
PROCEDE DE PRODUCTION D'ALCOXYSILYLMETHYLISOCYANURATES

(30) Priorität: 03.03.2005 DE 102005009790
(43) Veröffentlichungstag der Anmeldung: 14.11.2007
(73) Patentinhaber: Wacker Chemie AG, 81737 München (DE)
(72) Erfinder: POPP, Alfred, 82008 Unterhaching (DE); STOWISCHEK, Klaus, 80798 München (DE)
(74) Vertreter: Fritz, Helmut
(86) Internationale Anmeldenummer: PCT/EP2006/001969
(87) Internationale Veröffentlichungsnummer: WO 2006/092324

(56) Entgegenhaltungen:
- DE-A1- 2 419 125
- DATABASE CA [Online] CHEMICAL ABSTRACTS SERVICE, COLUMBUS, OHIO, US; "Semiconductor device" XP002381508 gefunden im STN Database accession no. 1982:432193 -& JP 57 030336 A (HITACHI, LTD., JAPAN) 18. Februar 1982 (1982-02-18) in der Anmeldung erwähnt
- MACGREGOR, AMY ET AL: "OBSERVATIONS ON THE SYNTHESIS OF 1,3,5-TRIS(3-TRIMETHOXYSILYLPROPYL)-ISOCYA NURATE" POLYMER PREPRINTS, Bd. 42, Nr. 1, 2001, Seiten 167-168, XP009066573 in der Anmeldung erwähnt
- SMETANKINA ET AL: ZHURNAL OBSHCHEI KHIMII, Bd. 39, Nr. 9, 1969, Seiten 2016-2020, XP009066582 in der Anmeldung erwähnt

## Beschreibung

Die Erfindung betrifft ein Verfahren zur Herstellung von Alkoxysilylmethylisocyanuraten.

Alkoxysilylalkylisocyanurate finden Verwendung als Beschleuniger oder Promotoren für die Adhäsion von raumtemperaturvernetzenden Organosiloxanen und silanmodifizierten Polymeren, als Additiv für Organosiloxanmischungen bei der Beschichtung von Fasern oder in Automobillacken. Wichtigste Vertreter dieser Stoffklasse sind die Alkoxysilylpropylisocyanurate, die seit mehr als 30 Jahren industriell produziert werden. Im Vergleich zu den genannten Alkoxysilylpropylisocyanuraten besitzen Alkoxysilylmethylisocyanurate erhebliche Vorteile. Durch die räumliche Nähe der Alkoxysilylgruppe zum Isocyanuratring werden die Alkoxygruppen aktiviert, so dass im Vergleich zu den Propylisocyanuraten eine erhebliche Steigerung der Reaktivität (Vernetzungsreaktion) zu beobachten ist.

Alkoxysilylmethylisocyanurate sind bekannt. Die einzige explizite Erwähnung dieser Verbindungen findet sich in JP 57030336 A2. Dort wird deren Verwendung für die Oberflächenbeschichtung von Halbleitern beansprucht. Es findet sich jedoch bisher kein Hinweis über ein geeignetes Herstellungsverfahren.

Darüber hinaus sind allgemein Alkoxysilylalkylisocyanurate und Verfahren zu deren Herstellung bekannt. So beschreibt US 3821218 A Alkoxysilylalkylisocyanurate, wobei die Alkyl-Spacer ausgewählt sind aus der Gruppe C₁-C₈-Alkyl. Beispiele finden sich jedoch lediglich für Propyl-Spacer (C₃-Alkyl), wobei zu deren Herstellung die unkatalysierte Umsetzung von Chlorpropylalkoxysilanen mit Metallisocyanaten in DMF verwendet wird. US 3494951 A, US 3598852 A, US 3607901 A und DE 2419125 A beschreiben analoge Verfahren. US 5218133 A beschreibt die Darstellung von Silylisocyanuraten durch a) Umsetzung eines Aminosilans mit Dialkyl- oder Diarylcarbonaten, b) Neutralisierung und c) anschließender thermischer Umsetzung des gebildeten Carbamats in Anwesenheit eines Crack-Katalysators.

US 5905150 A demonstriert anhand der Umsetzung von Alkoxysilylpropylchloriden mit Metallisocyanaten, dass Verfahren mit Phasentransferkatalysatoren auf Guanidiniumsalz-Basis geeignet für die Synthese der entsprechenden Isocyanurate sind. MacGregor et al. zeigten daraufhin dass für dieses System ausschließlich Guanidiniumsalz-Phasentransfer-Katalysatoren geeignet sind (Polymer Preprints, 2001, 42(1), S. 167-168).

Bei der Verwendung von Tetraethylammoniumiodid als Phasentransfer-Katalysator hingegen wird für die Umsetzung von ω-Haloalkylsilanen (z. B. Chlormethyltrimethylsilan) mit KOCN die bevorzugte Bildung der korrespondierenden Isocyanatoalkylsilane und Uretdione beschrieben (Smetankina et al. Zhurnal Obshchei Khimii (1969), 39(9), 2016-20). Das Auftreten von Isocyanuraten wurde nicht beobachtet.

Gegenstand der Erfindung ist ein Verfahren zur Herstellung von Alkoxysilylmethylisocyanuraten der allgemeinen Formel I, 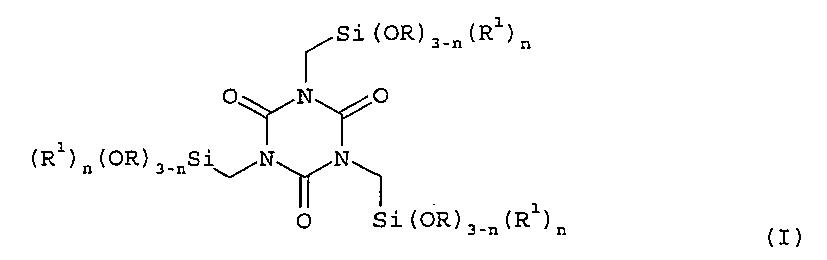 bei dem Chlormethylalkoxysilane der allgemeinen Formel II

(RO)₃₋ₙ(R¹)ₙSi-CH₂-Cl (II)

mit Metallisocyanaten der allgemeinen Formel III

M(OCN)ₘ (III)

in Gegenwart von Tetrakohlenwasserstoffammoniumsalz-Katalysatoren der allgemeinen Formel IV

(R²)₄N⁺X⁻ (IV)

umgesetzt werden, wobei
- R: einen C₁-C₁₅-Kohlenwasserstoff-Rest oder Acetylrest,
- R¹: ein Wasserstoffatom oder einen gegebenenfalls mit -CN, -NCO, -NR³₂, -COOH, -COOR³, -Halogen, -Acryl, -Epoxy, -SH, -OH oder -CONR³₂ substituierten Si-C gebundenen C₁-C₂₀- Kohlenwasserstoffrest, bei dem einander nicht benachbarte Methyleneinheiten durch Gruppen -O-, -CO-, -COO-, -OCO-, oder -OCOO-, -S-, oder -NR³- ersetzt sein können und bei dem dem eine oder mehrere, einander nicht benachbarte Methineinheiten durch Gruppen, -N=,-N=N-,oder -P= ersetzt sein können,
- n: den Wert 0, 1 oder 2,
- M: ein Alkali- oder Erdalkalimetall,
- m: den Wert 1 oder 2,
- R²: einen gegebenenfalls mit -CN, -OH oder Halogen substituierten C₁-C₂₀-Kohlenwasserstoff-Rest,
- R³: ein Wasserstoffatom oder einen gegebenenfalls mit -CN, Halogen, -SH oder -OH substituierten C₁-C₂₀- Kohlenwasserstoffrest, bei dem einander nicht benachbarte Methyleneinheiten durch Gruppen -O-, -CO-, -COO-, -OCO-, oder -OCOO- oder -S-, ersetzt sein können,
- X: einen Rest, ausgewählt aus OH, F, Cl, Br, I, ClO₄, NO₃, BF₄, AsF₆, BPh₄, PF₆, AlCl₄, CF₃SO₃, HSO₄ und SCN, bedeuten.

Fasst man den Stand der Technik zusammen, so muss ein Fachmann davon ausgehen, dass für die Synthese von Alkoxysilylmethylisocyanuraten, der Einsatz von Tetrakohlenwasserstoffammoniumsalz-Phasentransfer-Katalysatoren keine Verbesserungen des Herstellprozesses mit sich bringt, sondern im Gegenteil zu einer Änderung des Produktspektrums, nämlich zur Bildung von Uretdionen führt. Es wurde nun gefunden, dass o.g. Annahmen nicht auf die Darstellung von Alkoxysilylmethylisocyanuraten übertragbar sind. Die Verwendung von Tetrakohlenwasserstoffammoniumsalz-PT-Katalysatoren führt zu einer erheblichen Verbesserung der Reaktionsperformance, insbesondere Steigerung der Reaktionsgeschwindigkeit, Steigerung der Raum-Zeit-Leistung und verminderte Bildung von Nebenprodukten.

Vorzugsweise bedeutet R einen C₁-C₈-Kohlenwasserstoff-Rest, besonders bevorzugt ein C₁-C₃-Alkyl-Rest, insbesondere Methyl-oder Ethylrest.

Vorzugsweise bedeutet R¹ einen C₁-C₈-Kohlenwasserstoff-Rest, besonders bevorzugt ein C₁-C₃-Alkyl-Rest oder Phenylrest, insbesondere Methyl- oder Ethylrest.

Vorzugsweise wird M ausgewählt aus Li, Na, K, Rb, Be, Mg, Ca, Sr, Ba. Besonders bevorzugte Beispiele geeigneter Metallisocyanate der allgemeinen Formel III sind Kalium- und Natriumisocyanat.

Vorzugsweise bedeutet R² einen linearen oder verzweigten aliphatischen oder aliphatisch an das Stickstoffatom gebundenen Alkarylrest C₁-C₁₂-Kohlenwasserstoff-Rest, besonders bevorzugt einen linearen aliphatischen C₁-C₈-Kohlenwasserstoff-Rest.

Vorzugsweise bedeutet R³ einen C₁-C₁₂-Kohlenwasserstoff-Rest, besonders bevorzugt ein C₁-C₆-Alkyl-Rest, insbesondere Methyl-oder Ethylrest.

Vorzugsweise wird X ausgewählt aus Cl, Br, I, BF₄ und BPh₄, besonders bevorzugt aus I und BF₄.

Beispiele geeigneter Chlormethylalkoxysilane der allgemeinen Formel II schließen ein Chlormethylmethoxydimethylsilan, Chlormethyldimethoxymethylsilan, Chlormethyltrimethoxysilan, Chlormethylethoxydimethylsilan, Chlormethyldiethoxymethylsilan, Chlormethyltriethoxysilan, Chlormethylacetoxydimethylsilan, Chlormethyldiacetoxymethylsilan und Chlormethyltriacetoxysilan. Besonders bevorzugte Chlormethylalkoxysilane sind Chlormethylmethoxydimethylsilan, Chlormethyldimethoxymethylsilan und Chlormethyltrimethoxysilan.

Beispiele geeigneter Tetrakohlenwasserstoffammoniumsalz-Katalysatoren der allgemeinen Formel IV schließen ein Tetramethylammoniumiodid, Tetraethylammoniumiodid, Tetrabutylammoniumiodid, Benzyltributylammoniumchlorid, Tetrabutylammoniumbromid, Tetraethylammoniumtetrafluoroborat, Tetrabutylammoniumtetrafluoroborat und Tetrabutylammoniumtetraphenyloborat. Besonders bevorzugte Tetrakohlenwasserstoffammoniumsalz-Katalysatoren sind Tetrabutylammoniumiodid, Tetraethylammoniumiodid, Tetramethylammoniumiodid und Tetrabutylammoniumtetrafluoroborat sowie deren Gemische.

Das erfindungsgemäße Verfahren kann in An- und Abwesenheit eines Lösungsmittels durchgeführt werden. Vorzugsweise findet das Verfahren in einem Lösungsmittel oder Lösungsmittelgemisch statt. Als Lösungsmittel oder Lösungsmittelgemisch werden bevorzugt polar aprotische Lösungsmittel verwendet, die die Reaktion nicht in unerwünschter Weise beeinflussen oder zu unerwünschten Nebenreaktionen führen. Geeignete Lösungsmittel sind alle, in denen zumindest teilweise die eingesetzten Verbindungen unter Betriebsbedingungen bezüglich Konzentration und Temperatur löslich sind. Besonders geeignet als Lösungsmittel ist Dimethylformamid oder Lösungsmittelgemische, die Dimethylformamid enthalten. Bevorzugt sind Lösungsmittel oder Lösungsmittelgemische, deren Siedepunkt oder Siedebereich bei 0,1 MPa höchstens 200°C beträgt.

Die Zugabe der Reaktanden und des Lösungsmittels kann sowohl batchweise als auch kontinuierlich erfolgen. In einer bevorzugten Ausführungsform wird ein Reaktand der allgemeinen Formel II und/oder III zudosiert. Vorteilhafterweise wird das Metallisocyanat und der Tetrakohlenwasserstoffammoniumsalz-Katalysator, gegebenenfalls im gewünschten Lösungsmittel, vorgelegt und das Chlormethylalkoxysilan bei der geeigneten Prozesstemperatur zudosiert.

Die Reaktion wird vorteilhafterweise bei einer Temperatur von 0 °C bis +200 °C durchgeführt, bevorzugt von +80 °C bis +160 °C.

Vorzugsweise werden auf 1 mol Chlormethylalkoxysilane der allgemeinen Formel II 0,8 bis 1,5 mol, m,insbesondere 1 bis 1,2 mol Metallisocyanate der allgemeinen Formel III eingesetzt. Vorzugsweise werden auf 1 mol Chlormethylalkoxysilane der allgemeinen Formel II 0,1 bis 200 mmol, insbesondere 1 bis 50 mmol Tetrakohlenwasserstoffammoniumsalz-Katalysator der allgemeinen Formel IV eingesetzt.

Der Reaktionsverlauf lässt sich leicht mit üblichen Methoden, wie beispielsweise über GC oder HPLC verfolgen.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1: Darstellung von 1,3,5-Tris-[(methoxydimethylsilanyl)-methyl]-[1,3,5]triazinan-2,4,6-trion

Die Apparatur wird ca. 30 min. mit Argon gespült. Anschließend werden DMF (87.9 g, 1.20 mol), NaOCN (21.5 g, 0.33 mol), Chlormethylmethoxydimethylsilan (41.1g, 0.30 mol) und 1.6 mol% Tetramethylammoniumiodid (1.0 g, 5.0 mmol) bei Raumtemperatur vorgelegt. Innerhalb einer Stunde wird auf 130 °C erhitzt und diese Temperatur für weitere zwei Stunden beibehalten. Nach Abkühlen auf Raumtemperatur wird die Reaktionsmasse filtriert, und das Lösungsmittel wird unter reduziertem Druck entfernt. Der Rückstand besitzt folgende Zusammensetzung (gaschromatigraphische Bestimmung der Peak-Flächenprozent: GC_{PA-%}):

| | |
|---|---|
| **Isocyanurat**: 1,3,5-Tris-[(methoxydimethylsilanyl)-methyl]-[1,3,5]triazinan-2,4,6-trion | 87.0 % |
| **Uretdion**: 1,3-Bis-[(methoxydimethylsilanyl)methyl]-[1,3]diazetidine-2,4-dione | 0.5 % |
| **Allophanat**: [(Methoxydimethylsilyl)methyl] [[[(methoxydimethylsilyl )methyl]amino]carbonyl]-carbaminsäuremethylester | 0.4 % |
| **Methylsilylcarbamat**: Bis-[(methoxydimethylsilanyl)-methyl]-carbaminsäuremethylester | 1.4 % |
| **Carbamat**: [(Methoxydimethylsilanyl)-methyl]carbaminsäuremethylester | 6.2 % |

Das klare farblose Isocyanurat wird destillativ abgetrennt und gereinigt (Sdp. 145 °C/ 0.03 mbar):
¹H-NMR (500 MHz, CDCl₃) : δ 3.48, 0.21 ppm.
¹³C-NMR (75 MHz, CDCl₃): δ 148.8, 50.2, 32.7, -2.85 ppm.
²⁹Si-NMR (60 MHz, CDCl₃) : δ 14.43 ppm.

### Vergleichsbeispiel 1 (nicht erfindungsgemäss): Darstellung von 1,3,5-Tris-[(methoxy-dimethyl-silanyl)-methyl]-[1,3,5]triazinane-2,4,6-trion

Die Versuchsdurchführung erfolgt analog Beispiel 1 jedoch ohne Tetrakohlenwasserstoffammoniumsalz-Katalysator. Die Reaktionsmasse besitzt bei dieser Variante folgende Zusammensetzung (GC_{PA-%}) :

| | |
|---|---|
| **Isocyanurat**: 1,3,5-Tris-[(methoxydimethylsilanyl)-methyl]-[1,3,5]triazinan-2,4,6-trion | 3.0 % |
| **Uretdion**: 1,3-Bis-[(methoxydimethylsilanyl)methyl]-[1,3]diazetidine-2,4-dione | 27.0 % |
| **Allophanat**: [(Methoxydimethylsilyl)methyl][[[(methoxydimethylsilyl )methyl]amino]carbonyl]-carbaminsäuremethylester | 2.5 % |
| **Methylsilylcarbamat**: Bis-[(methoxydimethylsilanyl)-methyl]-carbaminsäuremethylester | 1.9 % |
| **Carbamat**: [(Methoxydimethylsilanyl)-methyl]-carbaminsäuremethylester | 3.8 % |
| **Edukt**: Chlormethylmethoxydimethylsilan | 62.0 % |

### Beispiele 2 - 7

Die Beispiele wurden analog Beispiel 1 durchgeführt. Die Menge an Tetrakohlenwasserstoffammoniumsalzbezieht sich auf mol% bezüglich Chlormethylmethoxydimethylsilan.

| | **Tetrakohlenwasserstoffammoniumsalz** | **Menge [mol%]** | **GC_{PA-%} (Isocyanurat)** |
|---|---|---|---|
| 2 | Tetrabutylammoniumbromid | 0.4 | 86.2 |
| 3 | Tetraethylammoniumiodid | 0.5 | 85.0 |
| 4 | Tetraethylammoniumtetrafluoroborat | 0.5 | 82.6 |
| 5 | Tetrabutylammoniumtetraphenyloborat | 0.3 | 82.5 |
| 6 | Tetramethylammoniumiodid | 16.7 | 88.7 |
| 7 | Tetramethylammoniumiodid | 8.3 | 86.6 |

### Beispiel 8:

Die Versuchsdurchführung erfolgt analog Beispiel 1 jedoch mit KOCN (26.8 g, 0.33 mol) anstelle von NaOCN.
Die Reaktionsmasse enthält bei dieser Variante 88.3 % Isocyanurat [GC_{PA-%}].

### Beispiel 9:

Die Versuchsdurchführung erfolgt analog Beispiel 1 jedoch wird das Chlormethylmethoxydimethylsilan im Verlauf von einer Stunde bei 130 °C zudosiert und anschließend noch 2 h bei dieser Temperatur gerührt.
Die Reaktionsmasse enthält bei dieser Variante 78.8 % Isocyanurat [GC_{PA-%}].

### Beispiel 10: Darstellung von 1,3,5-Tris-[(dimethoxymethylsilanyl)-methyl]-[1,3,5]triazinan-2,4,6-trion

Die Versuchsdurchführung erfolgt analog Beispiel 1 jedoch wird anstelle von Chlormethylmethoxydimethylsilan das Chlormethyldimethoxymethylsilan verwendet.
Die Reaktionsmasse enthält bei dieser Variante 45.0 % Isocyanurat [GC_{PA-%}].

### Vergleichsbeispiel 2 (nicht erfindungsgemäss):

Die Versuchsdurchführung erfolgt analog Beispiel 10 jedoch ohne Tetrakohlenwasserstoffammoniumsalz-Katalysator.
Die Reaktionsmasse enthält bei dieser Variante 23.0 % Isocyanurat [GC_{PA-%}].

Der Vergleich der Beispiele 1 und 9 bzw. Vergleichsbeispiele 1 und 2 zeigt eine erheblich grössere Reaktionsgeschwindigkeit mit dem erfindungsgemässen Einsatz von Phasentransferkatalysator. Im Vergleich zur nicht katalysierten Reaktion erlaubt der erfindungsgemässe Einsatz von Phasentransferkatalysator nahezu eine Verdopplung der Raum-Zeit-Leistung im Vergleich der Produktbildung aus Beispiel 1 (-0.34 mol L⁻¹ h⁻¹) mit Beispiel 4 in US 3821218 A (-0.13 mol L⁻¹ h⁻¹)).

## Patentansprüche

1. Verfahren zur Herstellung von
Alkoxysilylmethylisocyanuraten der allgemeinen Formel I, 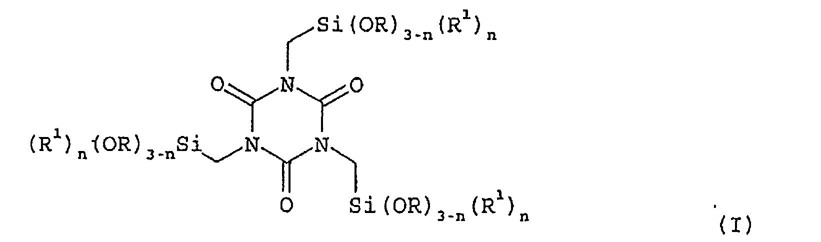 bei dem Chlormethylalkoxysilane der allgemeinen Formel II
(RO)₃₋ₙ(R¹)ₙSi-CH₂-Cl (II)
mit Metallisocyanaten der allgemeinen Formel III
M(OCN)ₘ (III)
in Gegenwart von Tetrakohlenwasserstoffammoniumsalz-Katalysatoren der allgemeinen Formel IV
(R²)₄N⁺X⁻ (IV)
umgesetzt werden, wobei
R einen C₁-C₁₅-Kohlenwasserstoff-Rest oder Acetylrest,
R¹ ein Wasserstoffatom oder einen gegebenenfalls mit -CN, -NCO, -NR³₂, -COOH, -COOR³, -Halogen, -Acryl, -Epoxy, -SH, -OH oder -CONR³₂ substituierten Si-C gebundenen C₁-C₂₀-Kohlenwasserstoffrest, bei dem einander nicht benachbarte Methyleneinheiten durch Gruppen -O-, -CO-, -COO-, -OCO-, oder -OCOO-, -S-, oder -NR³- ersetzt sein können und bei dem eine oder mehrere, einander nicht benachbarte Methineinheiten durch Gruppen, -N=, -N=N-, oder -P= ersetzt sein können,
n den Wert 0, 1 oder 2,
M ein Alkali- oder Erdalkalimetall,
m den Wert 1 oder 2,
R² einen gegebenenfalls mit -CN, -OH oder Halogen substituierten C₁-C₂₀-Kohlenwasserstoff-Rest,
R³ ein Wasserstoffatom oder einen gegebenenfalls mit -CN, Halogen, -SH oder -OH substituierten C₁-C₂₀- Kohlenwasserstoffrest, bei dem einander nicht benachbarte Methyleneinheiten durch Gruppen -O-, -CO-, -COO-, -OCO-, oder -OCOO- oder -S-, ersetzt sein können,
X einen Rest, ausgewählt aus OH, F, Cl, Br, I, ClO₄, NO₃, BF₄, AsF₆, BPh₄, PF₆, AlCl₄, CF₃SO₃, HSO₄ und SCN, bedeuten.

2. Verfahren nach Anspruch 1 wobei das Chlormethylalkoxysilan der allgemeinen Formel II ausgewählt wird aus Chlormethylmethoxydimethylsilan, Chlormethyldimethoxymethylsilan und Chlormethyltrimethoxysilan.

3. Verfahren nach Anspruch 1 und 2, wobei das Metallisocyanat der allgemeinen Formel III ausgewählt wird aus Kalium- und Natriumisocyanat.

4. Verfahren nach Anspruch 1 bis 3, wobei der Tetrakohlenwasserstoffammoniumsalz-Katalysator der allgemeinen Formel IV ausgewählt wird aus Tetrabutylammoniumiodid, Tetraethylammoniumiodid, Tetramethylammoniumiodid und Tetrabutylammoniumtetrafluoroborat sowie Gemischen der vorgenannten Verbindungen.

5. Verfahren nach Anspruch 1 bis 4, wobei als Lösungsmittel für die Umsetzung Dimethylformamid oder ein Lösungsmittelgemisch, das Dimethylformamid enthält, verwendet wird.

6. Verfahren nach Anspruch 1 bis 5, wobei die Reaktion bei einer Temperatur von +80 °C bis +160 °C durchgeführt wird.

7. Verfahren nach Anspruch 1 bis 6, wobei die Umsetzung batchweise erfolgt.

8. Verfahren nach Anspruch 1 bis 7, wobei das Metallisocyanat der allgemeinen Formel III und der Tetrakohlenwasserstoffammoniumsalz-Katalysator der allgemeinen Formel IV vorgelegt und das Chlormethylalkoxysilan der allgemeinen Formel II zudosiert wird.

## Claims

1. Method for producing alkoxysilylmethyl isocyanurates of the general formula I 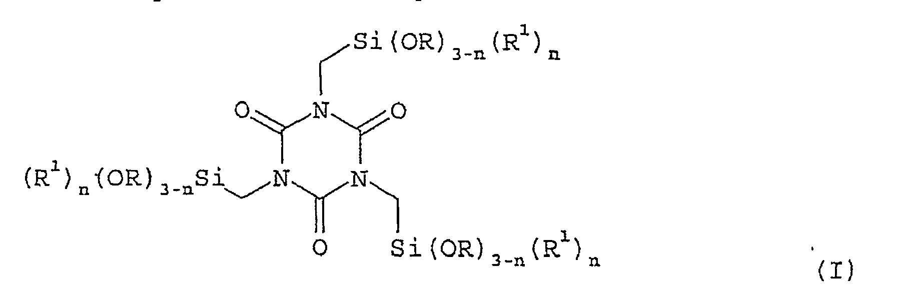 in which chloromethylalkoxysilanes of the general formula II
(RO)₃₋ₙ(R¹)ₙSi-CH₂-Cl (II)
are reacted with metal isocyanates of the general formula III
M(OCN)ₘ (III)
in the presence of tetrahydrocarbonammonium salt catalysts of the general formula IV
(R²)₄N⁺X⁻ (IV)
in which
R is a C₁-C₁₅-hydrocarbon radical or acetyl radical,
R¹ is a hydrogen atom or a Si-C bonded C₁-C₂₀- hydrocarbon radical which is optionally substituted by -CN, -NCO, -NR³₂, -COOH, -COOR³, -halogen, -acryloyl, -epoxy, -SH, -OH or -CONR³₂ and in which non-neighboring methylene units may be replaced by -O-, -CO-, -COO-, -OCO- or -OCOO-, -S-, or -NR³- groups and in which one or more, non-neighboring methine units may be replaced by -N=, -N=N- or -P= groups,
n has the value 0, 1 or 2,
M is an alkali metal or alkaline earth metal
m has the value 1 or 2,
R² is a C₁-C₂₀-hydrocarbon radical optionally substituted by -CN, -OH or halogen,
R³ is a hydrogen atom or a C₁-C₂₀-hydrocarbon radical which is optionally substituted by -CN, halogen, -SH or -OH and in which non-neighboring methylene units may be replaced by -O-, -CO-, -COO-, -OCO- or -OCOO- or -S- groups, and
X is a radical selected from OH, F, Cl, Br, I, ClO₄, NO₃, BF₄, AsF₆, BPh₄, PF₆, AlCl₄, CF₃SO₃, HSO₄ and SCN.

2. Method according to Claim 1, the chloromethylalkoxysilane of the general formula II being selected from chloromethylmethoxydimethylsilane, chloromethyldimethoxymethylsilane and chloromethyltrimethoxysilane.

3. Method according to Claims 1 and 2, the metal isocyanate of the general formula III being selected from potassium and sodium isocyanate.

4. Method according to Claims 1 to 3, the tetrahydrocarbonammonium salt catalyst of the general formula IV being selected from tetrabutylammonium iodide, tetraethylammonium iodide, tetramethylammonium iodide and tetrabutylammonium tetrafluoroborate and mixtures of the abovementioned compounds.

5. Method according to Claims 1 to 4, dimethylformamide or a solvent mixture which contains dimethylformamide being used as the solvent for the reaction.

6. Method according to Claims 1 to 5, the reaction being carried out at a temperature of from +80°C to +160°C.

7. Method according to Claims 1 to 6, the reaction being effected batchwise.

8. Method according to Claims 1 to 7, the metal isocyanate of the general formula III and the tetrahydrocarbonammonium salt catalyst of the general formula IV being initially introduced and the chloromethylalkoxysilane of the general formula II being metered in.

## Revendications

1. Procédé en vue de la fabrication d'alcoxysilylméthylisocyanurates de la formule générale I 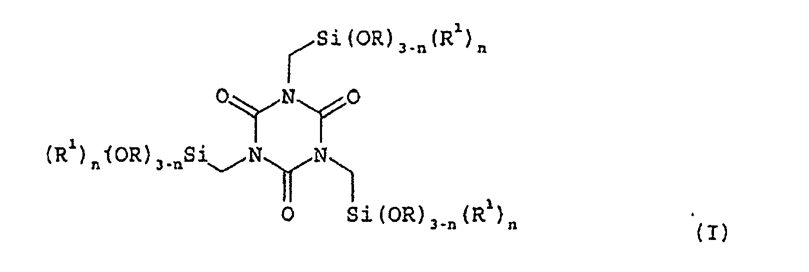 selon lequel on fait réagir les chlorométhylalcoxysilanes de la formule générale II
(RO)₃₋ₙ(R¹)ₙsi-CH₂-Cl (II)
avec des isocyanates métalliques de la formule générale III
M(OCN)ₘ (III) ,
en présence de catalyseurs de sel d'ammonium du tétrachlorure de carbone de la formule générale IV
(R²)₄N⁺X⁻ (IV)
R signifiant un radical hydrocarboné en C₁-C₁₅ ou un radical acétyle
R¹ signifiant un atome d'hydrogène ou un radical hydrocarboné en C₁-C₂₀ à liaison Si-C, substitué, le cas échéant, à l'aide de -CN, -NCO, -NR³₂, -COOH, -COOR³, halogène, acryle, époxy, -SH, -OH ou -CONR³₂, dans le cas duquel des unités de méthylène non voisines les unes des autres peuvent être remplacées par des groupements -O-, -CO-, -COO-, -OCO- ou -OCOO-, -S- ou -NR³- et dans le cas duquel une ou plusieurs unités de méthine non voisines les unes des autres peuvent être remplacées par des groupements -N=, -N=N- ou -P=,
N représentant la valeur 0, 1 ou 2
M représentant un métal alcalin ou alcalino-terreux,
m représentant la valeur 1 ou 2,
R² signifiant un radical hydrocarboné en C₁-C₂₀ substitué, le cas échéant, à l'aide de -CN, -OH ou halogène,
R³ signifiant un atome d'hydrogène ou un radical hydrocarboné en C₁-C₂₀, substitué, le cas échéant, à l'aide de -CN, halogène, -SH ou -OH, dans le cas duquel des unités de méthylène non voisines les unes des autres peuvent être remplacées par des groupements -O-, -CO-, -COO-, -OCO- ou -OCOO-, -S-,
X signifiant un radical, sélectionné parmi OH, F, Cl, Br, I, ClO₄, NO₃, BF₄, AsF₆, BPh₄, PF₆, AlCl₄, CF₃SO₃, HSO₄ et SCN.

2. Procédé selon la revendication 1, le chlorométhylalcoxysilane de la formule générale II étant sélectionné parmi le chlorométhylméthoxydiméthylsilane, le chlorométhyldiméthoxyméthylsilane et le chlorométhyltriméthoxysilane.

3. Procédé selon la revendication 1 ou 2, l'isocyanate métallique de la formule générale III étant sélectionné parmi l'isocyanate de potassium et l'isocyanate de sodium.

4. Procédé selon la revendication 1 à 3, le catalyseur du sel d'ammonium du tétrachlorure de carbone de la formule générale IV étant sélectionné parmi l'iodure de tétrabutylammonium, l'iodure de tétraéthylammonium, l'iodure de tétraméthylammonium et le tétrafluoroborate de tétrabutylammonium ainsi que parmi des mélanges des composés suscités.

5. Procédé selon la revendication 1 à 4, le diméthylformamide ou un mélange de solvants qui contient du diméthylformamide étant utilisé en tant que solvant pour la réaction.

6. Procédé selon la revendication 1 à 5, la réaction étant effectuée à une température de +80 °C à + 160 °C.

7. Procédé selon la revendication 1 à 6, la réaction se faisant par lot.

8. Procédé selon la revendication 1 à 7, l'isocyanate métallique de la formule générale III et le catalyseur de sel d'ammonium du tétrachlorure de carbone de la formule IV étant introduits initialement et le chlorométhylalcoxysilane de la formule générale II étant ajouté par dosage.
